# EUROPÄISCHE PATENTSCHRIFT

(11) **EP 2 628 922 B1**
(45) Veröffentlichungstag und Bekanntmachung des Hinweises auf die Patenterteilung: **19.11.2014**
(21) Anmeldenummer: 13000259.5
(22) Anmeldetag: 18.01.2013
(51) Int. Cl.: F02D 19/10, F02D 41/00, F02M 25/07, F02D 19/06, F02D 41/30, F02M 69/04, F02D 41/14

(54) **Verfahren zum Betreiben einer selbstzündenden Brennkraftmaschine**
Method for operating a self-igniting combustion engine
Procédé destiné au fonctionnement d'un moteur à combustion interne à auto-allumage

(30) Priorität: 16.02.2012 DE 102012002948
(43) Veröffentlichungstag der Anmeldung: 21.08.2013
(73) Patentinhaber: MAN Truck & Bus AG, 80995 München (DE)
(72) Erfinder: Werner Prümm, Franz, 90482 Nürnberg (DE)

(56) Entgegenhaltungen:
- WO-A1-2008/043323
- WO-A1-2011/158375
- DE-A1-102010 048 910
- US-A1- 2007 000 456

## Beschreibung

Die vorliegende Erfindung betrifft ein Verfahren zum Betreiben einer selbstzündenden Brennkraftmaschine gemäß dem Oberbegriff des Patentanspruchs 1, sowie eine Brennkraftmaschine, insbesondere zur Durchführung des Verfahrens nach dem Oberbegriff des Patentanspruchs 12.

Ein Verfahren der gattungsgemäßen Art beschreibt die DE 10 2007 022 230 A1, bei der eine selbstzündende Brennkraftmaschine in einem Einstoffbetrieb mit Dieselöl und in einem Zweistoffbetrieb mit Dieselöl zur Erzeugung eines Zündstrahls und mit einem gasförmigen oder flüssigen Alternativkraftstoff wie zum Beispiel Erdgas, Biogas, Methanol, Ethanol, etc. beschickt wird. Beim Dieselbetrieb ist es aus Wirkungsgradgründen wünschenswert, dass die Brennkraftmaschine mit Aufladung, insbesondere einer Abgasturboaufladung betrieben wird, wobei eine Ladedruckregelung mit einer Bypassleitung und einem Bypassventil vorzusehen ist. Eine Abgasrückführung mit einem gesteuerten Abgasrückführventil dient dabei hauptsächlich zur Absenkung der NOx- Werte im Abgas. Ferner werden üblicherweise Oxidationskatalysatoren im Abgassystem eingesetzt, die unter anderem die Ausscheidung von Rußpartikeln im Abgas eliminieren.

Aufgabe der Erfindung ist es, ein Verfahren der gattungsgemäßen Art vorzuschlagen, mit dem es gelingt, die Erfordernisse zur Erzielung niedriger Abgasgrenzwerte auch im Zweistoffbetrieb der Brennkraftmaschine bei geringem Mehraufwand sicherzustellen. Ferner soll eine baulich und steuerungstechnisch vorteilhafte Brennkraftmaschine zur Durchführung des Verfahrens angegeben werden.

Die Lösung der verfahrensgemäßen Aufgabe gelingt mit den Merkmalen des Patentanspruchs 1. Bezüglich der Brennkraftmaschine gelingt die Lösung mit den Merkmalen des Patentanspruchs 12. Vorteilhafte Weiterbildungen des Verfahrens und der Brennkraftmaschine sind Gegenstand der jeweiligen Unteransprüche.

Erfindungsgemäß wird vorgeschlagen, dass die Brennkraftmaschine im Zweistoffbetrieb mit einer erhöhten Abgasrückführrate betrieben ist und zudem die Luftzufuhr im Ansaugsystem derart gedrosselt wird, dass sich im Abgas ein Lambdawert von größer 1 bis maximal 1,3, bevorzugt von größer 1 bis maximal 1,2, höchst bevorzugt von 1,03 bis 1,1, insbesondere um 1,05, einstellt. Durch die vorgeschlagenen Maßnahmen kann die Stickstoffemission (NOx) wirksam gesenkt werden; auch die Kohlenwasserstoffemission (HC) wird deutlich abgesenkt. Des Weiteren wird durch die Drosselung der Verbrennungsluft auf den besagten Lambdawert die Abgastemperatur derart angehoben, dass ein nachgeschalteter Oxidationskatalysator eine schnell einsetzende, wirksame Konvertierung der HC- und der CO-Anteile im Abgas leisten kann. Insbesondere stellt der Betrieb mit Erdgas, mit dem Hauptbestandteil Methan eine große Herausforderung dar. Das während des Arbeitsprozesses unverbrannte Methan stellt eine sehr stabile Verbindung dar, welche mit üblichen Diesel-Oxidationskatalysatoren nicht oxidiert werden kann. Spezielle Methan-Oxidationskatalysatoren benötigen hohe Arbeitstemperaturen über 450°C. Die Abgastemperaturen moderner Dieselmotoren sind deutlich geringer als diese Werte. Um die Wirksamkeit eines Oxidationskatalysators zu gewährleisten, ist auch maßgebend, dass durch den angegebenen Lambdawert (überstöchiometrisches Kraftstoff-Luft-Verhältnis) genügend Sauerstoff im Abgas vorhanden ist, um die Oxidation von HC und CO zu ermöglichen.

Die Drosselung der Luftzufuhr kann bevorzugt mittels einer Drosselklappe im Ansaugsystem bewerkstelligt werden, die unter anderem abhängig vom Signal zumindest einer im Abgassystem eingesetzten Lambdasonde geregelt ist. Die Lambdasonde steuert somit nicht wie allgemein üblich die Kraftstoffzumessung - diese kann nach einem Kennfeld konstant zugemessen werden - sondern die Zumischung an Verbrennungsluft zur Einregelung des Lambdawerts.

Des Weiteren wird vorgeschlagen, dass die Abgasrückführrate im Zweistoffbetrieb 40% oder mehr der zugeführten Luftmenge beträgt, also gegenüber dem Dieselbetrieb deutlich erhöht ist. Die Maßnahme bewirkt insbesondere eine deutliche Reduzierung der Stickstoffoxidemission und beugt der Gefahr von Verbrennungsanomalien, wie klopfender Verbrennung und verfrühten Selbstzündung vor.

Aufgrund der thermodynamischen Unterschiede im Verbrennungsablauf in den Brennräumen der Brennkraftmaschine ist es ferner vorteilhaft, wenn im Zweistoffbetrieb der Brennkraftmaschine der Ladedruck der Aufladeeinrichtung in einem vorgegebenen Maße, vorzugsweise dauerhaft vermindert, bevorzugt aber bei einer Brennkraftmaschine mit Abgasturboaufladung mittels zumindest eines Abgasturboladers durch vorzugsweise dauerhaftes Öffnen des wenigstens einen Bypassventils stark zurückgefahren wird. Da im Zweistoffbetrieb nicht mit hohem Luftüberschuss gefahren wird, kann durch diese Maßnahme der Abgasgegendruck durch Umgehung der zumindest einen Abgasturbine vermindert werden (verbesserter Gaswechsel).

Im Zweistoffbetrieb der Brennkraftmaschine kann zu einer weiteren, günstigen Beeinflussung der Verbrennungsabläufe die zudosierte Flüssigkraftstoffmenge in eine Voreinspritzung und eine Haupteinspritzung oder in eine Haupteinspritzung und eine Nacheinspritzung oder in eine Vor-, Haupt- und Nacheinspritzung aufgeteilt werden, wobei die Haupteinspritzung stets vor dem oberen Totpunkt (OT) des jeweiligen Zylinders durchgeführt werden soll.

Dabei kann bevorzugt bei niedriger Last (vorzugsweise definiert als bis zu ca. 40% des maximal möglichen Drehmoments) eine Flüssigkraftstoff Haupteinspritzung wenigstens 15 Grad vor OT des jeweiligen Zylinders und bei demgegenüber hoher Last (vorzugsweise definiert als größer 80% des maximal möglichen Drehmoments) ca. 2 bis 5 Grad vor OT des jeweiligen Zylinders durchgeführt werden. Bei einer Haupteinspritzung sollten zudem 70 bis 90%, insbesondere etwa 80% des jeweils benötigten Flüssigkraftstoffs eingespritzt werden.

Des Weiteren kann im Zweistoffbetrieb über die Einspritzeinrichtung eine Voreinspritzung an Flüssigkraftstoff durchgeführt werden, wodurch der Druckanstieg in den Brennräumen der Brennkraftmaschine abgeflacht wird. Eine Nacheinspritzung kann indes zu einem verbesserten Durchbrennverhalten der Ladung und dementsprechend zu einer verminderten Rußbildung mit beitragen.

Verfahrensgemäß wird weiterhin vorgeschlagen, dass in der Kaltstartphase und/oder im Leerlauf die Brennkraftmaschine nur im Einstoffbetrieb gefahren wird, um ein stabiles Fahrverhalten und niedrige Abgasgrenzwerte im Kaltfahrbereich sicherzustellen.

Die Abgase der Abgasrückführung in das Ansaugsystem der Brennkraftmaschine können im Einstoffbetrieb wie an sich bekannt gekühlt und im Zweistoffbetrieb weniger oder nicht gekühlt werden, um im Zweistoffbetrieb insbesondere eine Homogenisierung der zugeführten Ladung und eine Anhebung der Abgastemperatur herzustellen. Des Weiteren kann die Abgastemperatur des rückgeführten Abgases im Zweistoffbetrieb erhöht sein, indem eine kürzere Rückführleitung aktiviert oder die Kühlfunktion eines in die Rückführleitung integrierten AGR Kühlers vermindert ist. Beide Maßnahmen sind baulich und steuerungstechnisch relativ einfach ausführbar.

Weiter kann alternativ oder zusätzlich bei einer Brennkraftmaschine mit einem Ladeluftkühler die Kühlfunktion des Ladeluftkühlers im Zweistoffbetrieb vermindert oder unterbrochen werden.

Die erfindungsgemäße Brennkraftmaschine ist dadurch gekennzeichnet, dass die Brennkraftmaschine im Zweistoffbetrieb durch modifizierte Steuerung des Abgasrückführventils mit einer höheren Abgasrückführrate als im Einstoffbetrieb betrieben ist und zudem die Luftzufuhr im Ansaugsystem über ein steuerbares Drosselelement derart gedrosselt ist, dass sich im Abgas ein Lambdawert von größer 1 bis 1,3, bevorzugt von größer 1 bis 1,2, höchst bevorzugt von 1,03 bis 1,1, insbesondere um 1,05 einstellt. Insbesondere kann die Luftzufuhr im Zweistoffbetrieb mittels zumindest einer im Abgassystem angeordneten Lambdasonde bei jeweils konstanter Kraftstoffzufuhr über das Drosselelement eingestellt sein.

Die Lambdasonde kann bevorzugt eine Breitband-Lambdasonde mit einem Messbereich zwischen 0,7 und 4 sein, um zuverlässig eine Einregelung des Drosselelements bzw. der Drosselklappe im Ansaugsystem auf den gewünschten Lambdawert über den gesamten Betriebsbereich der Brennkraftmaschine sicherzustellen.

In einer steuerungstechnisch einfachen Modifikation kann im Einstoffbetrieb der Brennkraftmaschine der Ladedruck in der Ladedruckleitung des Ansaugsystems über zumindest ein eine Abgasturbine umgehendes Bypassventil und eine Bypassleitung gesteuert sein, während im Zweistoffbetrieb das Bypassventil mehr oder minder dauerhaft geöffnet ist und keine Ladedruckregelung stattfindet, wie dies bereits zuvor beschrieben wurde.

Wenn als Alternativ-Kraftstoff ein Gas verwendet ist, kann der Gasmischer besonders bevorzugt stromab der Drosselklappe als Ringspaltmischer um die gemeinsame Ladedruckleitung angeordnet sein, wobei gegebenenfalls die Mündung der Abgasrückführleitung in den Ringspaltmischer integriert sein kann, um schon außerhalb der Brennräume der Brennkraftmaschine eine homogene Vermischung von Verbrennungsluft, Gas und dem rückgeführten Abgas bei baulich kompakten Abmaßen herzustellen.

Schließlich können in einer bevorzugten Ausgestaltung der Erfindung zwei miteinander verknüpfte, elektronische Motorsteuergeräte verwendet sein, von denen das eine in herkömmlicher Weise die Zumessung des Flüssigkraftstoffs im Einstoffbetrieb, den Ladedruck, die Abgasrückführung, etc. steuert und das zweite Motorsteuergerät die Zumessung beider Kraftstoffarten, die Drosselklappe nach Maßgabe der Lambdawerte im Abgassystem, die erhöhte Abgasrückführung über das Rückführventil, die Verminderung des Ladedrucks durch Öffnen des Bypassventils und gegebenenfalls die Abgastemperatur über die Abgasrückführung und deren Kühlung wie in den Verfahrensansprüchen angeführt steuert.

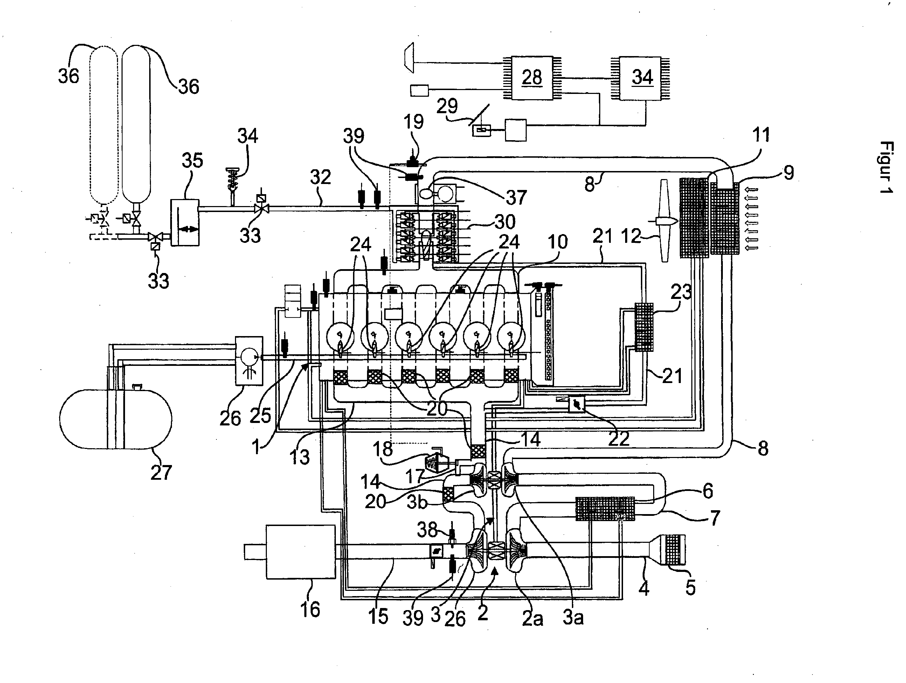

Ein Ausführungsbeispiel der Erfindung ist im Folgenden anhand der schematischen Darstellung einer Brennkraftmaschine für Dieselbetrieb und Zweistoffbetrieb in Fig. 1 näher erläutert.

In Fig. 1 ist, soweit zum Verständnis der Erfindung erforderlich eine selbstzündende Sechs-Zylinder-Hubkolben-Viertakt-Brennkraftmaschine 1 für ein Kraftfahrzeug, insbesondere ein Nutzkraftfahrzeug, dargestellt, die im Einstoffbetrieb mit einem Flüssigkraftstoff bzw. Dieselöl und in einem Zweistoffbetrieb mit Dieselöl als Zündquelle und einem Alternativkraftstoff bzw. hier Erdgas (CH4) betrieben werden kann.

Die Brennkraftmaschine 1 weist eine Register-Aufladeeinrichtung mit zwei Abgasturboladern 2, 3 auf, die hintereinander geschaltet als Niedrigdruckstufe und Hochdruckstufe ausgelegt sind.

Dabei saugt der Verdichter 2a der Niedrigdruckstufe über eine Ansaugleitung 4 und ein Luftfilter 5 Verbrennungsluft an und fördert sie gegebenenfalls über einen an das Kühlsystem (nicht näher dargestellt) der Brennkraftmaschine 1 angeschlossenen Zwischenkühler 6 in eine Verbindungsleitung 7 zum zweiten Verdichter 3a der Hochdruckstufe. Von dort wird die verdichtete Verbrennungsluft über die Ladedruckleitung 8 mit einem integrierten Ladeluftkühler 9 zum Ansaugverteiler 10 und schließlich über die nicht dargestellten Gaswechselventile den Brennräumen der Brennkraftmaschine 1 zugeführt.

Der Ladeluftkühler 9 ist beispielsweise an den Kühler 11 des Kühlwassersystems der Brennkraftmaschine 1 angebaut, deren Durchströmung mit Kühlluft erfolgt durch Staudruck im Fahrbetrieb und mittels eines Temperatur gesteuerten, elektrisch betriebenen Lüfters 12.

Abgasseitig weist die Brennkraftmaschine 1 einen mit den Brennräumen über Abgaskanäle (ohne Bezugszeichen) verbundenen Abgaskrümmer 13 auf, an den über eine gemeinsame Abgasleitung 14 die Abgasturbine 3b der Hochdruckstufe und anschließend die Abgasturbine 2b der Niederdruckstufe angeschlossen sind.

Von der Abgasturbine 2b wird das Abgas über eine abführende Abgasleitung 15 und zumindest einen Schalldämpfer 16 an die Atmosphäre abgeleitet.

An der Hochdruck-Abgasturbine 3b ist eine Bypassleitung 17 angeordnet, die unter Umgehung der Abgasturbine 3b an die Abgasleitung 14 stromauf und stromab der Abgasturbine 3b angeschlossen ist. Die Bypassleitung 17 ist über ein Bypassventil 18 im Durchfluss steuerbar, wobei das Bypassventil 18 abhängig vom Ladedruck in der Ladedruckleitung 8 über ein elektrisches Taktventil 19 betätigt ist. Das Bypassventil 18 wird im Einstoffbetrieb der Brennkraftmaschine 1 zur Regelung des Ladedruckes in bekannter Weise betätigt.

Ein derartiges Bypassventil kann alternativ oder zusätzlich in analoger Weise auch an der Niederdruck-Abgasturbine 2b vorgesehen sein.

In dem Abgaskrümmer 13 bzw. in den von den Brennräumen der Brennkraftmaschine 1 abgehenden Abgaskanälen sind CH4-Oxidationskatalysatoren 20 eingesetzt; ferner sind in der Abgasleitung 14 stromauf der Abgasturbinen 3b, 2b weitere CH4-Oxidationskatalysatoren 20 vorgesehen, die oberhalb deren Anspringtemperatur von ca. 450 Grad C HC- und CO-Anteile im Abgas bei entsprechender Sauerstoffsättigung zu H2O und CO2 oxidieren.

Die Brennkraftmaschine 1 ist des Weiteren mit einer externen Abgasrückführeinrichtung versehen, die sich aus einer Rückführleitung 21, einem Rückführventil 22 und einem an das Kühlsystem der Brennkraftmaschine 1 angeschlossenen Abgaskühler 23 zusammensetzt. Die Rückführleitung 21 ist einerseits an die Abgasleitung 14 und andererseits an die Ladedruckleitung 8 angeschlossen. Durch entsprechende Steuerung des Rückführventils 22 kann die Abgasrückführrate in gewünschtem Maße bestimmt werden.

Zum Betrieb der Brennkraftmaschine 1 im Einstoffbetrieb bzw. Dieselbetrieb ist in bekannter Weise eine Kraftstoff-Einspritzeinrichtung (zum Beispiel Common rail) vorgesehen, mit im Wesentlichen je Zylinder einer in den Brennraum einspritzenden Einspritzdüse 24, einer gemeinsamen Kraftstoff-Zuführleitung 25 und einer Hochdruckpumpe 26, die den zur Einspritzung notwendigen Druck erzeugt. Die Einspritzzeit und -menge der elektrisch gesteuerten Einspritzventile 24 wird über ein erstes, elektronisches Motorsteuergerät 28 nach Maßgabe eines Lastsignals (Gaspedal 29), nach Drehzahl- und Temperatursignalen (nicht näher ausgeführt), etc. kennfeldgesteuert bestimmt.

Für den Zweistoffbetrieb der Brennkraftmaschine 1 ist in die Ladedruckleitung 8 nahe dem Ansaugverteiler 10 ein Gasmischer bzw. Ringspaltmischer 30 als Zuführeinrichtung für das Erdgas integriert, dessen Einblasventile (ohne Bezugszeichen) über ein zweites, elektronisches Motorsteuergerät 31 hinsichtlich der Einblasmenge gesteuert sind.

Der Ringspaltmischer 30, in den die Mündung der Abgas-Rückführleitung 21 ebenfalls nahe dem Ansaugverteiler 10 integriert sein kann, ist über eine Gasleitung 32 mit Druck- und Temperatursensoren, mit zwei Absperrventilen 33, ein Überdruckventil 34 und einen Gasdruckregler 35 an hier bevorzugt mehrere Hochdruck-Erdgastanks 36 angeschlossen und wird über diese im Zweistoffbetrieb mit Erdgas als Alternativkraftstoff versorgt.

Zur Zündung des Erdgases in den Brennräumen der Brennkraftmaschine 1 wird über die Einspritzdüsen 24 zusätzlich in einer berechneten Menge Dieselöl eingespritzt, wobei diese Einspritzung in eine Voreinspritzung, eine Haupteinspritzung und eine Nacheinspritzung wie folgt aufgeteilt ist:
Die Haupteinspritzung erfolgt stets vor OT des jeweiligen Zylinders der Brennkraftmaschine 1 und beträgt bei niedriger Last (bis ca. 40% des maximal möglichen Drehmoments) wenigstens 15 Grad vor OT und bei hoher Last (größer 80% des maximal möglichen Drehmoments) ca. 2 bis 5 Grad vor OT, dabei werden 70 bis 90%, insbesondere etwa 80% des jeweils benötigten Dieselöls eingespritzt.

Ferner wird eine Voreinspritzung zur Abflachung des Druckanstiegs in den Zylindern der Brennkraftmaschine und eine Nacheinspritzung (Nachbrenneffekt) zur Verminderung von Rußanteilen im Abgas durchgeführt.

Zur Steuerung der Einspritzung im Zweistoffbetrieb sind die beiden Motorsteuergeräte 28, 31 entsprechend miteinander vernetzt, um sowohl die Zuführung des Substitutionskraftstoffs (Erdgas) als auch die des Dieselöls als Zündquelle entsprechend zu steuern.

Dazu ist ferner in der Ladedruckleitung 8 stromauf des Gasmischers 30 eine elektrisch steuerbare Drosselklappe 37 vorgesehen, die abhängig vom Signal einer in die Abgasleitung 15 stromab der Abgasturbine 2b eingesetzten Breitband-Lambdasonde 38 und einer Temperatursonde 39 - die an das Steuergerät 31 angeschlossen sind - den Verbrennungsluftstrom derart drosselt, dass im Abgas ein Lambdawert von größer 1 bis maximal 1,3, insbesondere von 1,05 vorliegt (Lambda = 1 entspricht bekanntlich einem stöchiometrischen Kraftstoff-Luftverhältnis, während Lambda 1,05 oder > Magerbetrieb bzw. Luftüberschuss entspricht). Die Breitbandlambdasonde 38 hat bevorzugt einen Messbereich von Lambda 0,7 bis 4.

Die erforderliche Zumischung des Dieselöls und des Alternativkraftstoffs bzw. Erdgases im Zweistoffbetrieb erfolgt in einer Kennfeldsteuerung der Steuergeräte 28, 30 nach Maßgabe der Lastsignale, Drehzahlsignale, Temperatursignale von Temperatursonden 39 und der über das Abgasrückführventil 22 eingesteuerten Abgasrückführung, die gegenüber dem Einstoffbetrieb auf einen Wert von 40% und größer erhöht ist, um die Abgastemperatur der Brennkraftmaschine 1 anzuheben.

Dazu kann gegebenenfalls die Temperatur des rückgeführten Abgases weiter dadurch erhöht werden, dass entweder der Abgaskühler 23 kurzgeschlossen wird oder aber dadurch, dass unterschiedlich lange Rückführleitungen 21 (nicht dargestellt) eingesetzt sind, in denen das Abgas mehr oder weniger an Wärmeenergie verliert. Gegebenenfalls könnte dazu ferner die Temperatur der Verbrennungsluft in der Ladedruckleitung 8 angehoben werden, indem die Kühlung über den Ladedruckkühler 9 vermindert oder abgeschaltet wird (nicht dargestellt).

Im Einstoffbetrieb bzw. im dieselmotorischen Betrieb, bevorzugt zum Starten der Brennkraftmaschine 1 und im Kaltfahrbereich, wird die Einspritzung des Flüssigkraftstoffs über das Motorsteuergerät 28 in üblicher Weise gesteuert, ferner auch die Regelung des Ladedrucks durch Ansteuerung des Bypassventils 18 und der Abgasrückführrate über das Rückführventil 22. Die Drosselklappe 37 ist ständig geöffnet.

Über das zweite Motorsteuergerät 31 wird die Zumessung des Alternativkraftstoffs bzw. des Erdgases, die benötigte Menge an Dieselöl als Zündquelle, die Steuerung der Drosselklappe 37 nach Maßgabe der Lambdawerte der Lambdasonde 38 im Abgassystem und die erhöhte Abgasrückführung durch entsprechende Ansteuerung des Rückführventils 22 gesteuert. Des Weiteren wird das Bypassventil 18 über das Taktventil 19 vollständig geöffnet, wodurch der Ladedruck mehr oder minder stark verringert ist. Schließlich wird gegebenenfalls die Abgastemperatur der Brennkraftmaschine 1 über die verminderte Kühlung in der Rückführleitung 21 und/oder in der Ladedruckleitung 8 weiter angehoben.

Durch diese Maßnahmen werden die Stickstoffemission (NOx) und die Kohlenwasserstoffemission (HC) deutlich abgesenkt. Des Weiteren wird durch die Drosselung der Verbrennungsluft auf den besagten Lambdawert die Abgastemperatur derart angehoben, dass die nachgeschalteten Oxidationskatalysatoren 20 eine schnell einsetzende, wirksame Konvertierung der HC- und der CO-Anteile im Abgas leisten können. Dabei ist auch maßgebend, dass durch den angegebenen Lambdawert (leicht überstöchiometrisches Kraftstoff-Luft-Verhältnis) genügend Sauerstoff im Abgas vorhanden ist, um die Oxidation von HC und CO zu H2O und CO2 zu ermöglichen.

Die Erfindung ist nicht auf das beschriebene Ausführungsbeispiel beschränkt.

Insbesondere können im Zweistoffbetrieb der Brennkraftmaschine 1 auch andere Alternativkraftstoffe in gasförmiger oder flüssiger Form verwendet sein, wobei die Kraftstoffzuführeinrichtung für den Alternativkraftstoff entsprechend ausgebildet ist.

Die Anordnung der Oxidationskatalysatoren 20 und/oder der Lambdasonde 38 kann auch anders als dargestellt ausgeführt sein.

Anstelle der Registeraufladung mit den Abgasturboladern 2 und 3 kann auch eine einfache Abgasturboaufladung oder eine Kompressoraufladung vorgesehen sein.

Bei einer Registeraufladung wie beschrieben können gegebenenfalls auch zwei Bypassventile 18 in zwei Bypassleitungen 17 vorgesehen sein, die jeweils eine Abgasturbine (3b und 2b) kurzschließen.

Des Weiteren könnte anstatt der beschriebenen Zuführung des Alternativkraftstoffs (single point) auch eine zylinderselektive multi point Einspritzung bzw. Einblasung in die zylinderkopfseitigen Ansaugkanäle der Brennkraftmaschine 1 durchgeführt werden.

Entscheidend sind die Verfahrensparameter, mittels denen im Zweistoffbetrieb der Brennkraftmaschine 1 eine Lambdaregelung der Luftzufuhr (über die Drosselklappe 37) auf ca. 1,05 gefahren wird und zugleich eine wesentliche Erhöhung der Abgasrückführrate auf 40% oder mehr vorgenommen wird. Diese Maßnahme gegebenenfalls in Verbindung mit den weiteren, fakultativ vorgeschlagenen Merkmalen führen zu einer schneller einsetzenden, wirkungsvollerem Abgasreinigung.

### BEZUGSZEICHENLISTE

- 1: Brennkraftmaschine
- 2: Abgasturbolader Niedrigdruckstufe
- 2a: Verdichter
- 2b: Abgasturbine
- 3: Abgasturbolader Hochdruckstufe
- 3a: Verdichter
- 3b: Abgasturbine
- 4: Ansaugleitung
- 5: Luftfilter
- 6: Zwischenkühler
- 7: Verbindungsleitung
- 8: Ladedruckleitung
- 9: Ladeluftkühler
- 10: Ansaugverteiler
- 11: Wasserkühler
- 12: Lüfter
- 13: Abgaskrümmer
- 14: Abgasleitung
- 15: Abgasleitung
- 16: Schalldämpfer
- 17: Bypassleitung
- 18: Bypassventil
- 19: Taktventil
- 20: Oxidationskatalysatoren
- 21: Abgasrückführleitung
- 22: Abgasrückführventil
- 23: Abgasrückführkühler
- 24: Einspritzventile
- 25: Einspritzleitung
- 26: Hochdruckpumpe
- 27: Flüssigkraftstoff-Tank
- 28: Motorsteuergerät
- 29: Gaspedal
- 30: Ringspalt-Gasmischer
- 31: Motorsteuergerät
- 32: Gasleitung
- 33: Absperrventile
- 34: Überdruckventil
- 35: Gasdruckregler
- 36: Hochdrucktanks
- 37: Drosselklappe
- 38: Lambdasonde
- 39: Temperatursonden

## Patentansprüche

1. Verfahren zum Betreiben einer selbstzündenden Brennkraftmaschine (1), insbesondere für Kraftfahrzeuge, die im Einstoffbetrieb mit selbstzündendem Flüssigkraftstoff und im Zweistoffbetrieb mit dem Flüssigkraftstoff als Zündmittel sowie mit einem gasförmigen oder flüssigen Alternativ-Kraftstoff beschickt wird, wobei der Flüssigkraftstoff über eine Einspritzeinrichtung (24) in die Brennräume der Brennkraftmaschine (1) eingebracht und die Verbrennungsluft über eine im Ansaugsystem (8, 10) vorgesehene Aufladeeinrichtung (2, 3) zur Regelung des Ladedrucks vorverdichtet wird, wobei ferner eine Zuführeinrichtung vorgesehen ist, über die im Zweistoffbetrieb der Alternativ-Kraftstoff in das Ansaugsystem (8, 10) einbringbar ist, des Weiteren mit einer Abgasrückführeinrichtung, die über ein Abgasrückführventil (22) Abgase der Brennkraftmaschine in das Ansaugsystem zurückführt, wobei die Kraftstoffmengen über zumindest ein elektronisches Steuergerät nach Maßgabe betriebsspezifischer und/oder gegebenenfalls fahrdynamischer Parameter derart zugemessen werden, dass die geforderte Leistung und in Verbindung mit wenigstens einer stromab der Brennräume eingeschalteter Abgasreinigungseinrichtung (16) definierte Abgasgrenzwerte erzielt werden, **dadurch gekennzeichnet, dass** die Brennkraftmaschine (1) im Zweistoffbetrieb mit einer gegenüber dem Einstoffbetrieb erhöhten Abgasrückführrate betrieben ist und zudem die Luftzufuhr im Ansaugsystem (8) derart gedrosselt wird, dass sich im Abgas ein Lambdawert von größer 1 bis maximal 1,3, bevorzugt von größer 1 bis maximal 1,2, höchst bevorzugt von 1,03 bis 1,1 einstellt.

2. Verfahren nach Anspruch 1, **dadurch gekennzeichnet, dass** die Drosselung der Luftzufuhr mittels einer Drosselklappe (37) im Ansaugsystem (8) bewerkstelligt wird, die wenigstens unter anderem abhängig vom Signal zumindest einer im Abgassystem (15) eingesetzten Lambdasonde (38) geregelt ist.

3. Verfahren nach Anspruch 1 oder 2, **dadurch gekennzeichnet, dass** die Abgasrückführrate im Zweistoffbetrieb 40% oder mehr der zugeführten Luftmenge beträgt.

4. Verfahren nach einem der vorhergehenden Ansprüche, **dadurch gekennzeichnet, dass** im Zweistoffbetrieb der Brennkraftmaschine (1) der Ladedruck der Aufladeeinrichtung (2, 3) in einem vorgegebenen Maße, vorzugsweise dauerhaft vermindert ist.

5. Verfahren nach Anspruch 4, **dadurch gekennzeichnet, dass** bei einer Brennkraftmaschine (1) mit Abgasturboaufladung (2, 3) zumindest ein eine Abgasturbine (3b) umgehendes Bypassventil (18) vorgesehen ist, mittels dem im Einstoffbetrieb der Brennkraftmaschine (1) der Ladedruck in der Ladedruckleitung (8) des Ansaugsystems gesteuert ist, wobei das Bypassventil (18) im Zweistoffbetrieb der Brennkraftmaschine (1) in definiertem Maße, vorzugsweise dauerhaft geöffnet ist.

6. Verfahren nach einem der vorhergehenden Ansprüche, **dadurch gekennzeichnet, dass** im Zweistoffbetrieb der Brennkraftmaschine (1) die zudosierte Flüssigkraftstoffmenge in eine Voreinspritzung und eine Haupteinspritzung oder in eine Voreinspritzung, eine Haupteinspritzung und eine Nacheinspritzung aufgeteilt wird, wobei die Haupteinspritzung stets vor dem oberen Totpunkt (OT) des jeweiligen Zylinders durchgeführt wird.

7. Verfahren nach Anspruch 6, **dadurch gekennzeichnet, dass** im Zweistoffbetrieb der Brennkraftmaschine (1) und bei niedriger Last, vorzugsweise bis ca. 40% des maximal möglichen Drehmoments, eine Flüssigkraftstoff-Haupteinspritzung wenigstens 15 Grad vor OT des jeweiligen Zylinders erfolgt und/oder dass im Zweistoffbetrieb und bei hoher Last, vorzugsweise größer 80% des maximal möglichen Drehmoments, eine Flüssigkraftstoff-Haupteinspritzung bei in etwa 2 bis 5 Grad vor OT des jeweiligen Zylinders durchgeführt wird.

8. Verfahren nach Anspruch 6 oder 7, **dadurch gekennzeichnet, dass** im Zweistoffbetrieb bei einer Haupteinspritzung 70 bis 90%, insbesondere etwa 80% des jeweils benötigten Flüssigkraftstoffs eingespritzt wird.

9. Verfahren nach einem der vorhergehenden Ansprüche, **dadurch gekennzeichnet, dass** in der Kaltstartphase und/oder im Leerlauf die Brennkraftmaschine nur im Einstoffbetrieb betrieben wird.

10. Verfahren nach einem der vorhergehenden Ansprüche, **dadurch gekennzeichnet, dass** die Abgase der Abgasrückführung (21, 22, 23) in das Ansaugsystem (8) der Brennkraftmaschine (1) im Einstoffbetrieb gekühlt werden, während demgegenüber die Abgastemperatur des rückgeführten Abgases im Zweistoffbetrieb erhöht ist, vorzugsweise durch Verminderung der Kühlfunktion eines in der Rückführleitung (21) integrierten AGR Kühlers (23).

11. Verfahren nach einem der vorhergehenden Ansprüche, **dadurch gekennzeichnet, dass** bei einer Brennkraftmaschine (1) mit einem Ladeluftkühler (9) die Kühlfunktion des Ladeluftkühlers (9) im Zweistoffbetrieb vermindert oder unterbrochen wird.

12. Brennkraftmaschine, insbesondere zur Durchführung eines Verfahrens nach einem oder mehreren der vorhergehenden Ansprüche, wobei ein Flüssigkraftstoff über eine Einspritzeinrichtung (24, 25, 26) in die Brennräume der Brennkraftmaschine (1) eingebracht und eine Verbrennungsluft über zumindest einen Abgasturbolader (2, 3) zur Regelung des Ladedrucks vorverdichtet wird, wobei ferner eine Zuführeinrichtung (30, 35) vorgesehen ist, über die in einem Zweistoffbetrieb ein Alternativ-Kraftstoff in das Ansaugsystem (8) einbringbar ist, des Weiteren mit einer Abgasrückführeinrichtung (21, 22, 23), die über ein Abgasrückführventil (22) Abgase der Brennkraftmaschine in das Ansaugsystem (8) zurückführt, wobei die Kraftstoffmengen über zumindest ein elektronisches Steuergerät (28. 31) nach Maßgabe betriebsspezifischer und/oder gegebenenfalls fahrdynamischer Parameter derart zugemessen werden, dass die geforderte Leistung und in Verbindung mit zumindest einer stromab der Brennräume eingeschalteter Abgasreinigungseinrichtung definierte Abgasgrenzwerte erzielt werden, **dadurch gekennzeichnet, dass** die Brennkraftmaschine (1) im Zweistoffbetrieb durch modifizierte Steuerung des Abgasrückführventils (22) mit einer höheren Abgasrückführrate als im Einstoffbetrieb betrieben ist und zudem die Luftzufuhr im Ansaugsystem (8) über ein steuerbares Drosselelement (37), das in Abhängigkeit von einem Signal zumindest einer im Abgassystem (15) eingesetzten Lambdasonde (38) geregelt ist, derart gedrosselt ist, dass sich im Abgas ein Lambdawert von größer 1 bis maximal 1,3, bevorzugt von größer 1 bis maximal 1,2, höchst bevorzugt von 1,03 bis 1,1 einstellt.

13. Brennkraftmaschine nach Anspruch 12, **dadurch gekennzeichnet, dass** als Alternativ-Kraftstoff ein Gas verwendet ist und dass ein Gasmischer stromab der Drosselklappe (37) als Ringspaltmischer (30) um die gemeinsame Ladedruckleitung (8) angeordnet ist.

14. Brennkraftmaschine nach Anspruch 13, **dadurch gekennzeichnet, dass** die Mündung der Abgasrückführleitung (21) in den Ringspaltmischer (30) integriert ist.

15. Brennkraftmaschine nach einem der Ansprüche 12 bis 14, **dadurch gekennzeichnet, dass** zwei elektronische Motorsteuergeräte (28, 31) vorgesehen sind, von denen das eine (28) die Zumessung des Flüssigkraftstoffs im Einstoffbetrieb, den Ladedruck und die Abgasrückführung steuert, während das zweite Motorsteuergerät (31) die Zumessung beider Kraftstoffarten, die Drosselklappe (37) nach Maßgabe der Lambdawerte im Abgassystem, die erhöhte Abgasrückführung über das Rückführventil (22), das Bypassventil (18) zur Verminderung des Ladedrucks in der Ladedruckleitung (8) und/oder gegebenenfalls die Abgastemperatur über die Abgasrückführung und deren Kühlung steuert.

## Claims

1. A method for operating an auto-ignition internal combustion engine (1), in particular for motor vehicles, which is supplied with self-igniting liquid fuel in single-substance mode and with the liquid fuel as an ignition agent and a gaseous or liquid alternative fuel in dual-substance mode, wherein the liquid fuel is introduced into the combustion chambers of the internal combustion engine (1) by means of an injection device (24), and the combustion air is precompressed by means of a pressure-charging device (2, 3) provided in the intake system (8, 10) for the purpose of controlling the boost pressure, wherein furthermore a feed device is provided, by means of which the alternative fuel can be introduced into the intake system (8, 10) in dual-substance mode, furthermore having an exhaust gas recirculation device, which recirculates exhaust gases from the internal combustion engine into the intake system via an exhaust gas recirculation valve (22), wherein the fuel quantities are metered in, in accordance with operation-specific parameters and/or, if appropriate, parameters relating to driving dynamics, by means of at least one electronic control unit in such a way that the required power and, in conjunction with at least one exhaust gas purification device (16) inserted downstream of the combustion chambers, defined exhaust gas limits are achieved, **characterized in that**, in dual-substance mode, the internal combustion engine (1) is operated at an increased exhaust gas recirculation rate as compared with single-substance mode and, furthermore, the air supply in the intake system (8) is throttled in such a way that a lambda value greater than 1 and up to 1.3, preferably greater than 1 and up to 1.2, most preferably 1.03 to 1.1, is obtained in the exhaust gas.

2. The method according to Claim 1, **characterized in that** the throttling of the air supply is accomplished by means of a throttle valve (37) in the intake system (8), which throttle valve is controlled inter alia in accordance with the signal of at least one lambda probe (38) inserted in the exhaust system (15).

3. The method according to Claim 1 or 2, **characterized in that** the exhaust gas recirculation rate in dual-substance mode is 40% or more of the air quantity supplied.

4. The method according to one of the preceding claims, **characterized in that** the boost pressure of the pressure-charging device (2, 3) is reduced to a predetermined extent, preferably permanently, in the dual-substance mode of the internal combustion engine (1).

5. The method according to Claim 4; **characterized in that**, in the case of an internal combustion engine (1) with exhaust turbocharging (2, 3), at least one bypass valve (18) that bypasses one exhaust turbine (3b) is provided, by means of which valve the boost pressure in the boost pressure line (8) of the intake system is controlled in the single-substance mode of the internal combustion engine (1), wherein the bypass valve (18) is opened to a defined extent, preferably permanently, in the dual-substance mode of the internal combustion engine (1).

6. The method according to one of the preceding claims, **characterized in that** the liquid fuel quantity metered in in the dual-substance mode of the internal combustion engine (1) is divided into a pilot injection and a main injection or into a pilot injection, a main injection and a post-injection, wherein the main injection is always carried out before the top dead centre position (TDC) of the respective cylinder.

7. The method according to Claim 6, **characterized in that** a liquid fuel main injection takes place at least 15 degrees before TDC of the respective cylinder in the dual-substance mode of the internal combustion engine (1) and at low load, preferably up to about 40% of the maximum possible torque, and/or **in that** a liquid fuel main injection is carried out at approximately 2 to 5 degrees before TDC of the respective cylinder in dual-substance mode and at high load, preferably greater than 80% of the maximum possible torque.

8. The method according to Claim 6 or 7, **characterized in that** 70 to 90%, in particular approximately 80%, of the respectively required liquid fuel is injected in a main injection in dual-substance mode.

9. The method according to one of the preceding claims, **characterized in that** the internal combustion engine is operated only in single-substance mode in the cold-starting phase and/or at idle.

10. The method according to one of the preceding claims, **characterized in that** the exhaust gases of the exhaust gas recirculation system (21, 22, 23) entering the intake system (8) of the internal combustion engine (1) are cooled in single-substance mode, whereas the exhaust gas temperature of the recirculated exhaust gas is increased relative thereto in dual-substance mode, preferably by reducing the cooling function of an EGR cooler (23) integrated into the recirculation line (21).

11. The method according to one of the preceding claims, **characterized in that**, in the case of an internal combustion engine (1) having a charge air cooler (9), the cooling function of the charge air cooler (9) is reduced or interrupted in dual-substance mode.

12. An internal combustion engine, in particular for carrying out a method according to one or more of the preceding claims, wherein a liquid fuel is introduced into the combustion chambers of the internal combustion engine (1) by means of an injection device (24, 25, 26), and a combustion air is precompressed by means of at least one exhaust turbocharger (2, 3) for the purpose of controlling the boost pressure, wherein furthermore a feed device (30, 35) is provided, by means of which an alternative fuel can be introduced into the intake system (8) in a dual-substance mode, furthermore having an exhaust gas recirculation device (21, 22, 23), which recirculates exhaust gases from the internal combustion engine into the intake system (8) via an exhaust gas recirculation valve (22), wherein the fuel quantities are metered in, in accordance with operation-specific parameters and/or, if appropriate, parameters relating to driving dynamics, by means of at least one electronic control unit (28, 31) in such a way that the required power and, in conjunction with at least one exhaust gas purification device inserted downstream of the combustion chambers, defined exhaust gas limits are achieved, **characterized in that**, in dual-substance mode, the internal combustion engine (1) is operated at a higher exhaust gas recirculation rate than in single-substance mode through modified control of the exhaust gas recirculation valve (22) and, furthermore, the air supply in the intake system (8) is throttled in such a way by means of a controllable throttling element (37), which is controlled in accordance with a signal of at least one lambda probe (38) inserted in the exhaust system (15), that a lambda value greater than 1 and up to 1.3, preferably greater than 1 and up to 1.2, most preferably 1.03 to 1.1, is obtained in the exhaust gas.

13. The internal combustion engine according to Claim 12, **characterized in that** a gas is used as an alternative fuel and **in that** a gas mixer is arranged downstream of the throttle valve (37) as an annular-gap mixer (30) around the common boost pressure line (8).

14. The internal combustion engine according to Claim 13, **characterized in that** the outlet of the exhaust gas recirculation line (21) is integrated into the annular-gap mixer (30).

15. The internal combustion engine according to one of Claims 12 to 14, **characterized in that** two electronic engine control units (28, 31) are provided, of which one (28) controls the metering of the liquid fuel in single-substance mode, the boost pressure and the exhaust gas recirculation, while the second engine control unit (31) controls the metering of both types of fuel, the throttle valve (37) in accordance with the lambda values in the exhaust system, the increased exhaust gas recirculation by means of the recirculation valve (22), the bypass valve (18) for reducing the boost pressure in the boost pressure line (8) and/or, if appropriate, the exhaust gas temperature by way of the exhaust gas recirculation system and the cooling thereof.

## Revendications

1. Procédé pour faire fonctionner un moteur à combustion interne à auto-allumage (1), en particulier pour véhicules automobiles, qui est alimenté en mode à un carburant en un carburant liquide à auto-allumage et en mode à deux carburants en le carburant liquide en tant qu'agent d'allumage et en un autre carburant gazeux ou liquide, le carburant liquide étant introduit dans les chambres de combustion du moteur à combustion interne (1) par le biais d'un dispositif d'injection (24) et l'air comburant étant précomprimé par le biais d'un dispositif de suralimentation (2, 3) prévu dans le système d'admission (8, 10) pour la régulation de la pression de suralimentation, un dispositif d'amenée étant en outre prévu, par le biais duquel, en mode à deux carburants, l'autre carburant peut être introduit dans le système d'admission (8, 10), et comprenant en outre un dispositif de recirculation de gaz d'échappement, qui fait recirculer des gaz d'échappement du moteur à combustion interne dans le système d'admission par le biais d'une soupape de recirculation de gaz d'échappement (22), les quantités de carburant étant dosées par le biais d'au moins un appareil de commande électronique en fonction de paramètres spécifiques au mode de fonctionnement et/ou éventuellement dynamiques relatifs à la conduite, de telle sorte que la puissance demandée et des valeurs limites de gaz d'échappement définies en association avec au moins un dispositif de purification des gaz d'échappement (16) monté en aval des chambres de combustion puissent être obtenues, **caractérisé en ce que** le moteur à combustion interne (1), en mode à deux carburants, fonctionne avec un taux de recirculation de gaz d'échappement accru par rapport au mode à un carburant et en outre l'apport d'air dans le système d'admission (8) est étranglé de telle sorte qu'une valeur lambda supérieure à 1 à au maximum 1,3, de préférence supérieure à 1 à au maximum 1,2, tout particulièrement préférablement de 1,03 à 1,1 s'établisse dans le gaz d'échappement.

2. Procédé selon la revendication 1, **caractérisé en ce que** l'étranglement de l'apport d'air est effectué au moyen d'un clapet d'étranglement (37) dans le système d'admission (8), lequel clapet d'étranglement est régulé au moins entre autres en fonction du signal d'au moins une sonde lambda (38) introduite dans le système de gaz d'échappement (15).

3. Procédé selon la revendication 1 ou 2, **caractérisé en ce que** le taux de recirculation des gaz d'échappement en mode à deux carburants est de 40 % ou plus de la quantité d'air acheminée.

4. Procédé selon l'une quelconque des revendications précédentes, **caractérisé en ce qu'**en mode à deux carburants du moteur à combustion interne (1), la pression de suralimentation du dispositif de suralimentation (2, 3) est réduite dans une mesure prédéfinie, de préférence de manière durable.

5. Procédé selon la revendication 4, **caractérisé en ce que** dans le cas d'un moteur à combustion interne (1) à turbocompression de gaz d'échappement (2, 3), au moins une soupape de dérivation (18) contournant une turbine de gaz d'échappement (3b) est prévue, au moyen de laquelle, en mode à un carburant du moteur à combustion interne (1), la pression de suralimentation dans la conduite de pression de suralimentation (8) du système d'admission est commandée, la soupape de dérivation (18), en mode à deux carburants du moteur à combustion interne (1), étant ouverte dans une mesure définie, de préférence de manière durable.

6. Procédé selon l'une quelconque des revendications précédentes, **caractérisé en ce qu'**en mode à deux carburants du moteur à combustion interne (1), la quantité de carburant liquide ajoutée de manière dosée est divisée en une pré-injection et une injection principale ou en une pré-injection, une injection principale et une post-injection, l'injection principale étant toujours effectuée avant le point mort haut (OT) du cylindre respectif.

7. Procédé selon la revendication 6, **caractérisé en ce qu'**en mode à deux carburants du moteur à combustion interne (1) et à faible charge, de préférence jusqu'à environ 40 % du couple maximum possible, une injection principale de carburant liquide s'effectue à au moins 15 degrés avant le point mort haut du cylindre respectif et/ou **en ce qu'**en mode à deux carburants et à charge élevée, de préférence à plus de 80 % du couple maximum possible, une injection principale de carburant liquide est effectuée à environ 2 à 5 degrés avant le point mort haut du cylindre respectif.

8. Procédé selon la revendication 6 ou 7, **caractérisé en ce qu'**en mode à deux carburants, lors d'une injection principale, de 70 à 90 %, en particulier approximativement 80 % du carburant liquide nécessaire dans chaque cas sont injectés.

9. Procédé selon l'une quelconque des revendications précédentes, **caractérisé en ce que** dans la phase de démarrage à froid et/ou en mode de ralenti, le moteur à combustion interne ne fonctionne qu'en mode à un carburant.

10. Procédé selon l'une quelconque des revendications précédentes, **caractérisé en ce que** les gaz d'échappement de la recirculation de gaz d'échappement (21, 22, 23) sont refroidis dans le système d'admission (8) du moteur à combustion interne (1) en mode à un carburant, tandis que par contre, la température de gaz d'échappement du gaz d'échappement recirculé en mode à deux carburants est augmentée, de préférence en réduisant la fonction de refroidissement d'un refroidisseur AGR (23) intégré dans la conduite de recirculation (21).

11. Procédé selon l'une quelconque des revendications précédentes, **caractérisé en ce que** dans un moteur à combustion interne (1) à refroidisseur d'air de suralimentation (9), la fonction de refroidissement du refroidisseur d'air de suralimentation (9) est réduite ou interrompue en mode à deux carburants.

12. Moteur à combustion interne, en particulier pour mettre en oeuvre un procédé selon l'une quelconque ou plusieurs des revendications précédentes, dans lequel un carburant liquide est introduit par le biais d'un dispositif d'injection (24, 25, 26) dans les chambres de combustion du moteur à combustion interne (1) et un air comburant est précomprimé par le biais d'au moins un turbocompresseur à gaz d'échappement (2, 3) pour la régulation de la pression de suralimentation, un dispositif d'amenée (30, 35) étant en outre prévu, par le biais duquel, dans un mode à deux carburants, un autre carburant peut être introduit dans le système d'admission (8), et comprenant en outre un dispositif de recirculation de gaz d'échappement (21, 22, 23), qui fait recirculer par le biais d'une soupape de recirculation de gaz d'échappement (22) des gaz d'échappement du moteur à combustion interne dans le système d'admission (8), les quantités de carburant étant dosées par le biais d'au moins un appareil de commande électronique (28, 31) en fonction de paramètres spécifiques au mode de fonctionnement et/ou éventuellement dynamiques relatifs à la conduite, de telle sorte que la puissance demandée et des valeurs limites de gaz d'échappement définies en association avec au moins un dispositif de purification des gaz d'échappement monté en aval des chambres de combustion soient obtenues, **caractérisé en ce que** le moteur à combustion interne (1), en mode à deux carburants, fonctionne, par une commande modifiée' de la soupape de recirculation de gaz d'échappement (22), avec un taux de recirculation de gaz d'échappement accru par rapport au mode à un carburant et en outre l'apport d'air dans le système d'admission (8) est étranglé par le biais d'un élément d'étranglement commandable (37) qui est réglé en fonction d'un signal d'au moins une sonde lambda (38) introduite dans le système de gaz d'échappement (15) de telle sorte qu'une valeur lambda supérieure à 1 à au maximum 1, 3, de préférence supérieure à 1 à au maximum 1,2, tout particulièrement préférablement de 1,03 à 1,1 s'établisse dans le gaz d'échappement.

13. Moteur à combustion interne selon la revendication 12, **caractérisé en ce que** l'on utilise un gaz en tant qu'autre carburant et **en ce qu'**un mélangeur de gaz est disposé en aval du clapet d'étranglement (37) en tant que mélangeur à fente annulaire (30) autour de la conduite de pression de suralimentation commune (8).

14. Moteur à combustion interne selon la revendication 13, **caractérisé en ce que** l'embouchure de la conduite de recirculation de gaz d'échappement (21) est intégrée dans le mélangeur à fente annulaire (30).

15. Moteur à combustion interne selon l'une quelconque des revendications 12 à 14, **caractérisé en ce que** deux appareils de commande de moteur électroniques (28, 31) sont prévus, dont l'un (28) commande le dosage du carburant liquide en mode à un carburant, la pression de suralimentation et la recirculation de gaz d'échappement, tandis que le deuxième appareil de commande de moteur (31) commande le dosage des deux types de carburant, le clapet d'étranglement (37) en fonction des valeurs lambda dans le système de gaz d'échappement, la recirculation accrue de gaz d'échappement par le biais de la soupape de recirculation (22), la soupape de dérivation (18) pour réduire la pression de suralimentation dans la conduite de pression de suralimentation (8) et/ou éventuellement la température des gaz d'échappement par le biais de la recirculation de gaz d'échappement et de son refroidissement.
